Europäisches Patentamt

European Patent Office

Office européen des brevets

(11) Publication number: **0 481 075 A1**

## EUROPEAN PATENT APPLICATION
### published in accordance with Art. 158(3) EPC

(21) Application number: 90905683.0

(22) Date of filing: **05.04.90**

(86) International application number: **PCT/JP90/00462**

(87) International publication number: **WO 91/15363 (17.10.91 91/24)**

(51) Int. Cl.⁵: **B32B 15/08**, E04F 13/12

(43) Date of publication of application: **22.04.92 Bulletin 92/17**

(84) Designated Contracting States: **DE FR GB IT**

(71) Applicant: **Kanaoka, Mineko**
**332, Kanadai**
**Toyama-shi, Toyama 930(JP)**
Applicant: **NIPPON CARBIDE KOGYO KABUSHIKI KAISHA**
**3-1, Marunouchi 3-chome Chiyoda-ku Tokyo 100(JP)**

(72) Inventor: **SAHARA, Masao**
**21-402, Kounandai 5-1, Kounan-ku**
**Yokohama-shi, Kanagawa 233(JP)**
Inventor: **MIMURA, Ikuo**
**571-1, Aoshima**
**Uozu-shi, Toyama 937(JP)**
Inventor: **HOUJO, Norihisa**
**70, Iwase Hakusan-cho**
**Toyama-shi, Toyama 931(JP)**
Inventor: **HABASAKI, Yasuharu**
**391, Yamadashin**

**Kurobe-shi, Toyama 938(JP)**
Inventor: **SUGIYAMA, Tadashi**
**1722-3-305, Saedo-cho, Midori-ku**
**Yokohama-shi, Kanagawa 226(JP)**
Inventor: **YABE, Hiroo**
**428-18, Kashiwa**
**Kashiwa-shi, Chiba 277(JP)**
Inventor: **TANAKA, Osamu**
**1-9-11, Shinkanaya**
**Uozu-shi, Toyama 937(JP)**
Inventor: **HASHIMOTO, Masanori**
**2-17-17, Ryogoku**
**Sumida-ku, Tokyo 130(JP)**
Inventor: **OOSAKI, Naotake**
**469, Motoshin**
**Uozu-shi, Toyama 937(JP)**
Inventor: **KANAOKA, Yasuo**

**deceased(JP)**

(74) Representative: **Grünecker, August (DE)**
**Patentanwälte Grünecker, Kinkeldey,**
**Stockmair & Partner Maximilianstrasse 58**
**W-8000 München 22(DE)**

(54) **WALL-FORMING STRUCTURAL MATERIAL AND RESIN-COATED METAL.**

(57) A wall-forming structural material is produced by molding a laminate, which is formed by sticking a synthetic resin film to the surface of a metal plate, so that at least one block-like unit projects beyond the surface side of the metal plate. A resin-coated metal is composed of a fluororesin layer fused thermally on the metal surface and a printed layer formed by using an ink consisting of a fluororesin composition having a thixotropy index (TI value) of from 2 to 8 as the uppermost layer.

# Fig ·1

# Fig ·2

# Fig ·3

Technical Field

The present invention relates to a wall-forming structural material, a wall structure having an appearance of block masonry, such as a brick wall, comprising said wall-forming structural material, and a resin-laminated metal formed by laminating a fluororesin film on a metal surface through thermal fusion.

Background Art

A brick wall has a unique appearance suggestive of high quality and is excellent as an outer wall of buildings. It has, however, problems such as the necessity for taking much time for laying bricks and a high cost.

There is a simple wall structure formed by supporting a plurality of sheets of a continuous metal plate on a pair of supports and providing it so as to have an appearance like a wood siding wall. This wall has an appearance scarcely suggestive of high quality and is unsatisfactory in weathering, staining and falling resistances.

There is also known a resin-laminated metal comprising a metallic base material, such as aluminum, and a fluororesin layer formed on the surface thereof to impart excellent properties inherent in the fluororesin, such as heat resistance, chemical resistance, electrical properties and mechanical properties, to the metal.

The fluororesin is, however, difficult to color. Specifically, although it is possible to mix a coloring component, such as a pigment, into a fluororesin by kneading to color uniformly the whole, it is unfavorably very difficult to color a resin-laminated metal having a surface coated with a fluororesin by printing characters, figures, etc., thereon for decoration, display, etc.

Accordingly, a first object of the present invention is to provide a wall-forming structural material capable of forming by simple means a wall structure having an appearance like a brick wall suggestive of high quality and excellent in weathering, staining and falling resistances; and a wall structure formed of said wall-forming structural material.

A second object of the present invention is to provide a resin-laminated metal having a fluororesin-coated surface and characters, figures, etc., firmly printed on the surface.

Disclosure of the Invention

In the present invention, the first object has been attained by providing a wall-forming structural material produced by molding a laminate comprising a metal plate and a synthetic resin film stuck to the surface of the metal plate in such a manner that at least one block-like unit projects beyond the surface side of the metal plate ("the first invention" to which reference will be made hereinafter means the above-defined invention).

The term "wall" in the expression "wall-forming" include a vertical wall and further the surfaces of various structures or structural materials, such as ceiling, roof, shutter and column.

As a result of various studies conducted by the present inventors, it has been found that the use of an ink comprising a fluororesin composition having a particular thixotropic index enables printing to be easily conducted on a fluororesin layer (film).

The present invention (second invention) has been made based on the above-described finding, and the second object has been attained by providing a resin-laminated metal characterized by having a printed layer formed by means of an ink comprising a fluororesin composition having a thixotropy index (TI value) of 2 to 8 as the uppermost layer ("the second invention" to which reference will be made hereinafter means the above-defined invention).

Further, the second object has been attained by providing a resin-coated metal characterized in that a fluororesin film having a printed layer is thermally fused on the surface of a metal with said printed layer being inside ("the third invention" to which reference will be made hereinafter means the above-defined invention).

Brief Description of Drawings

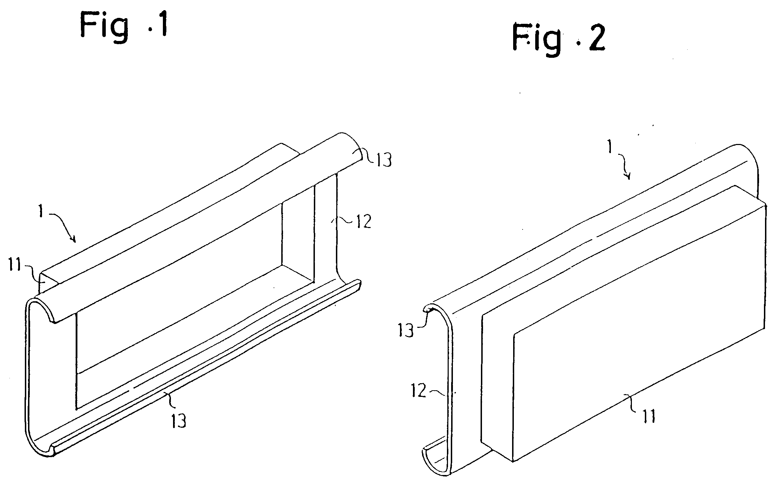

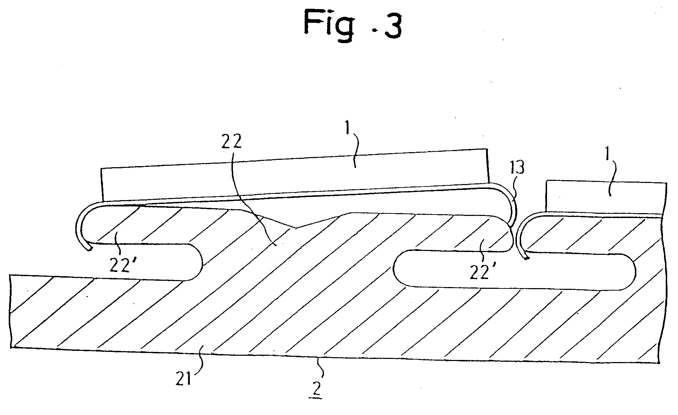

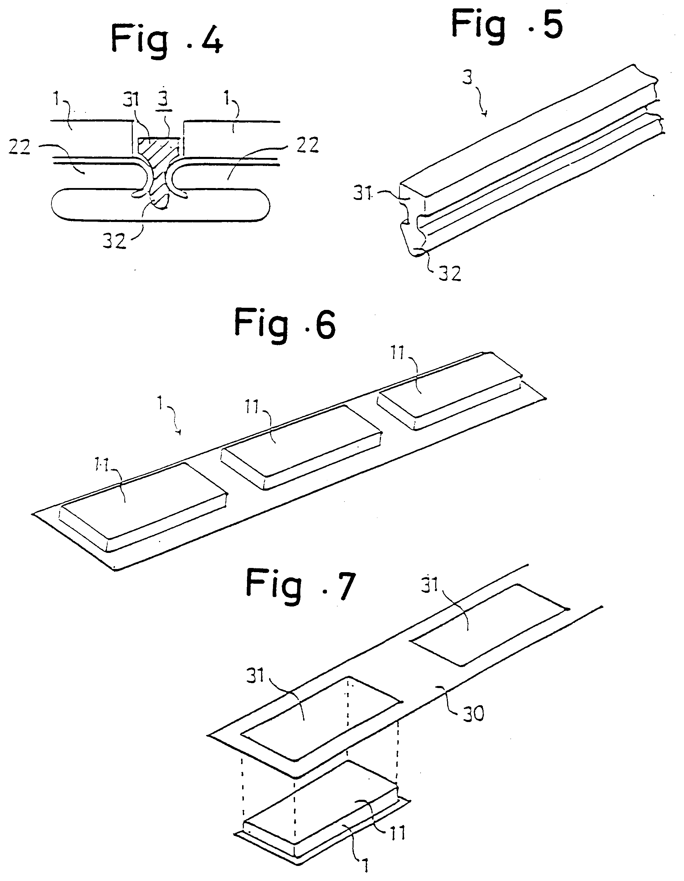

Figs. 1 and 2 are respectively perspective views of the reverse side (metal plate side) and the surface side (fluororesin film side) of one embodiment of the wall-forming structural material of the present invention (the first invention); Fig. 3 is a partial sectional view of a principal part of the step of forming one embodiment of the wall structure according to the present invention; Fig. 4 is a partial sectional view of a principal part of one embodiment of the wall structure according to the present invention; Fig. 5 is a perspective view of a fixing member used in the wall structure according to the present invention; Fig. 6 is a perspective view of another embodiment of the wall-forming structural material according to the present invention; and Fig. 7 is a perspective view of a further embodiment of the wall-forming structural material according to the present invention.

Fig. 8 is a schematic partial sectional view of one embodiment of the resin-laminated metal according to the present invention (the second invention); and Fig. 9 is a schematic partial sectional view of another embodiment of the resin-laminated metal.

Fig. 10 is a schematic partial sectional view of one embodiment of the resin-coated metal according to the present invention (the third invention).

(Detailed Description of the First Invention)

At the outset, the wall-forming structural material and the wall structure formed by making use of said wall-forming structural material according to the present invention will be described with reference to the drawings.

As shown in Figs. 1 and 2, the wall-forming structural material 1 of the present invention comprises a brick-like protrusion (block-like unit) 11 formed so as to protrude on the surface side of the metal plate and a base 12 formed on the periphery of the protrusion 11. The base 12 is provided with detentive sections 13 formed by bending each of the longitudinal edges thereof towards the reverse side.

As will be described later in Example 1, the wall-forming structural material 1 comprises a laminate composed of a metal plate and a fluororesin film stuck to the surface of the metal plate through a pressure sensitive adhesive, and can be produced by pressing and bending the laminate.

As shown in Fig. 3, the wall structure of the present invention is formed by supporting the wall-forming structural material 1 on a reinforcing support 2. As shown in the Fig. 3, the reinforcing support 2 comprises a panel-like body 21 and supports 22 formed on the surface of the body 21 integrally therewith. The support 22 is formed in a plurality of numbers parallel to each other at predetermined intervals. The width of each support is substantially the same as the length of the short side of the structural material 1. Edges 22' on both sides of the support are provided so that they can lock the detentive sections 13 of the wall-forming structural material 1.

The wall-forming structural material 1 detained and supported by the reinforcing support 2 is fixed with a fixing member 3 as shown in Fig. 4. As shown in Fig. 5, the fixing member 3 is in the form of a continuous length comprising a head 31 filling up a channel between the protrusions 11 of the wall-forming structural material 1 and a fit-insertion portion 32 having a wedge-shaped section fit and inserted into the gap between the supports 22 of the reinforcing support 2.

The wall structure of the present invention is prepared as shown in the Figs. 3 and 4 by successively supporting a plurality of the wall-forming structural materials 1 with the reinforcing support 2 in such a manner that the wall-forming structural materials are arranged so as to give an appearance like a brick wall.

The wall-forming structural material of the present invention is not limited to that shown in the Figs. 1 and 2. It may be one wherein, as shown in Fig. 6, a plurality of block-like units are formed in series at predetermined intervals. Also it may be one wherein, as shown in Fig. 7, a plurality of wall-forming structural materials 1 each provided with a single block-like unit 11 are attached in series by caulking to a flat plate 30 having a plurality of holes 31 provided so that the block-like unit of the structural material 1 can be fit and inserted into the hole.

The metal plate and synthetic resin film constituting the laminate used as the material for forming the wall-forming structural material according to the first invention, and a pressure sensitive adhesive suitable for sticking the synthetic resin film on the surface of the metal plate will now be described.

Examples of the metal plate, synthetic resin film and pressure sensitive adhesive include the following.

(1) Metal plate:

An aluminum plate is preferred!as the metal plate. There is no particular limitation on the thickness, width, length and composition of the plate. From the viewpoint of workability, etc., however, it is possible to use alloys of 3000 series (Al-Mn-base alloys), 5000 series (Al-Mg-base alloys) and 6000 series (Al-Mg-Si-base alloys) each defined in JIS classification, among which the alloys of 3000 series and 5000 series (for example, 5050) are preferred. In particular, the thickness is preferably 0.1 to 4 mm, still preferably 0.3 to 3 mm. The surface of the aluminum plate can be treated so as to improve the affinity for the pressure sensitive adhesive or adhesive.

4

(2) Synthetic resin film:

A fluororesin film is particularly suitable as the synthetic resin film. Therefore, a description will now be given mainly on the fluororesin film.

Examples of the fluororesin films include films formed by the molding of fluororesins such as PETFE, PTFE, CTFE, FVd, PCTFE and PVdF; among which the PETFE film is preferred from the viewpoint of drawability, etc. In any of the films, the thickness is preferably 10 to 209 $\mu$m. The PETFE film is preferably one described in Japanese Unexamined Patent Publication (Kokai) No. 59-50163.

The fluororesin is a generic term of synthetic resins prepared by the polymerization of a fluorinated olefin and a fluororesin having a fluorine content of 45% by weight or more, particularly 50% by weight or more is generally suitable for use in the present invention. Examples of the fluororesin of this type include ethylene/tetrafluoroethylene copolymer, ethylene/chlorotrifluoroethylene copolymer, hexafluoropropylene/tetrafluoroethylene copolymer, perfluoroalkyl vinyl ether/tetrafluoroethylene copolymer, polyvinylidene fluoride and polyvinyl fluoride. Although it is possible to use any of these fluororesins in the present invention, the ethylene/tetrafluoroethylene copolymer is particularly suitable, and especially preferred is one having a tetrafluoroethylene to ethylene molar ratio of 40/60 to 60/40, a content of a perfluoroalkyl vinyl monomer represented by the general formula $CH_2 = CH-C_nF_{2n+1}$ (wherein n is an integer of 2 to 10) of 0.1 to 10% by mole and a volume flow rate of 10 to 500 $mm^3$/sec. The volume flow rate is measured by extruding 1 g of a sample through a nozzle having a diameter of 1 mm and a land length of 2 mm at a predetermined temperature under a predetermined load of 30 $kg/cm^2$ by means of a Koka flow tester and expressed by the volume of a molten sample extruded per unit time.

The fluororesin film is preferably one which is colored brick-like light brown by compounding the resin with, for example, chrome vermilion and carbon black.

Examples of the synthetic resin film other than the fluororesin film include vinyl chloride resin film (for example, HI-S film manufactured by Nippon Carbide Industries Co., Ltd.), acrylic resin film (for example, HI-S film manufactured by Nippon Carbide Industries Co., Ltd.), polyester resin film and cellulose resin film.

(3) Adhesive:

Examples of the adhesive include acrylic, urethane and ethylene-vinyl acetate adhesives. Although the acrylic adhesive is particularly preferred, the adhesive is not limited to it only. Examples of the acrylic resin used in the acrylic pressure sensitive adhesive include ethyl acrylate, n-propyl acrylate, n-butyl acrylate, isobutyl acrylate, n-hexyl acrylate, 2-ethylhexyl acrylate, n-octyl acrylate and 2-methylbutyl acrylate resins.

Various additives and colorants may be added for the purpose of improving the weather resistance, heat resistance and adhesive force. Examples of the additive and colorant include the following ultraviolet absorbers, antioxidants, light stabilizers, tackifiers, plasticizers and pigments and dyes.

Ultraviolet absorber: benzophenones, benzotriazoles and cyanoacrylates.
Antioxidant: phenols, phosphorus compounds and sulfur compounds.
Light stabilizer: hindered phenols and hindered amines.
Tackifier: pinenes, coumarones and petroleum hydrocarbon resins.
Plasticizer: DOP, etc.
Pigment and dye: various compounds.

[Examples]

The wall-forming structural material and wall structure according to the first invention will now be described in more detail.

Example 1

A thin plate of aluminum and an ethylene/tetrafluoroethylene copolymer film (PETFE film) were stuck together by means of an acrylic pressure sensitive adhesive under the conditions of a laminating pressure of 100 kg/cm and a laminating temperature of 50°C to prepare a PETFE film-laminated aluminum plate.

The thin plate of aluminum was one comprising an aluminum alloy of 5052 series specified in JIS H-4000, having a thickness of 1 mm and being coated with white urethane coating on the whole surface thereof. The PETFE film was a film having a thickness of 40 $\mu$m formed by extruding pellets colored brick-like light brown by compounding the resin with chrome vermilion and carbon black. The acrylic pressure sensitive adhesive used as the pressure sensitive adhesive was one prepared by dissolving a polymer

5

having a butyl acrylate to acrylic acid molar ratio of 95 : 5 and a weight average molecular weight of 500000 in a mixed solvent comprising ethyl acetate and toluene in a weight ratio of 1 : 1 in a polymer concentration of 40%. 1000 g of the acrylic resin solution was mixed with 2 g of hexamethylene diisocyanate and 10 g of red oxide, and the acrylic resin mixture was applied to the PETFE film so that the thickness of coating after drying at 120°C for 3 min was 40 $\mu$m, thereby preparing a tackified PETFE film.

The PETFE film-laminated aluminum plate formed by sticking the aluminum plate and the tackified PETFE film together as described above was pressed and bent to prepare the wall-forming structural material 1 (the product of the present invention) as shown in the Figs. 1 and 2. The pressing was conducted under the conditions of a press pressure of 300 kg/cm$^2$ and a press temperature of 100°C, and a 100 $\mu$m-thick polyethylene protective film was stuck to the surface of the PETFE film for the purpose of preventing flawing and breaking during the working.

Example 2

A wall-forming structural material was prepared in the same manner as that of the Example 1 except that Fluorex Clear 20011 (a vinylidene fluoride film having a pressure sensitive adhesive applied thereto; manufactured by Rexham) was used instead of the PETFE film and acrylic pressure sensitive adhesive used in the Example 1.

Example 3

A wall-forming structural material was prepared in the same manner as that of the Example 1 except that Tedlar TUT10AG3 (a vinyl fluoride film manufactured by E.I. du Pont de Nemours & Co.; thickness of 25 $\mu$m; containing an UV absorber; free from a pressure sensitive adhesive) was used instead of the PETFE film used in the Example 1.

Example 4

The wall-forming structural materials prepared in the Example 1 were arranged by means of the reinforcing support 2 as shown in the Fig. 3 so as to give an appearance like a brick wall, and further fixed and reinforced by means of the fixing members 3 (material: a white coated aluminum shaped section) as shown in Fig. 4 to give an outer wall structure (a product of the present invention).

The outer wall structure thus obtained had excellent weathering, staining and falling resistances while maintaining an appearance suggestive of high quality like a brick wall.

Example 5

The thin plate of aluminum and the PETFE film were stuck together by means of a polyester urethane resin adhesive under the conditions of a laminating pressure of 100 kg/cm and a laminating temperature of 120°C to prepare a PETFE film-laminated aluminum plate.

The thin plate of aluminum was an aluminum alloy, of A5052 series specified in JIS H-4000 and had a thickness of 1.2 mm. Prior to the lamination, the thin plate was pretreated by immersing it in a 10% aqueous caustic soda solution for 10 min and then subjected to a chromate treatment by the conventional method.

The PETFE film used was one prepared by coloring PETFE pellets (comprising Aflon COP manufactured by Asahi Glass Co., Ltd.) ivory through the use of titanium oxide-titan yellow and carbon black, melt-extruding the colored PETFE pellets at an extrusion temperature of 320°C to prepare a film having a thickness of 50 $\mu$m and subjecting the bonding face of the film to a corona treatment so as to give a wetting index of 45 dyn.

The polyester urethane adhesive used as the adhesive comprised Takelac A310 and Takenate A-3 (manufactured by Takeda Chemical Industries, Ltd.) in a ratio of 10 : 1 and used as follows. It was mixed with 0.25 part of Tinuvin 327 (an ultraviolet absorber manufactured by Ciba-Geigy Limited), and the mixture was previously applied to a PETFE film at a coating weight of 10 g/m$^2$ by means of a gravure coater and dried at 120°C for 2 min.

A wall-forming structural material 1 was prepared from the aluminum plate and PETFE film coated with an adhesive in the same manner as that of the Example 1.

(Detailed Description of the Second Invention)

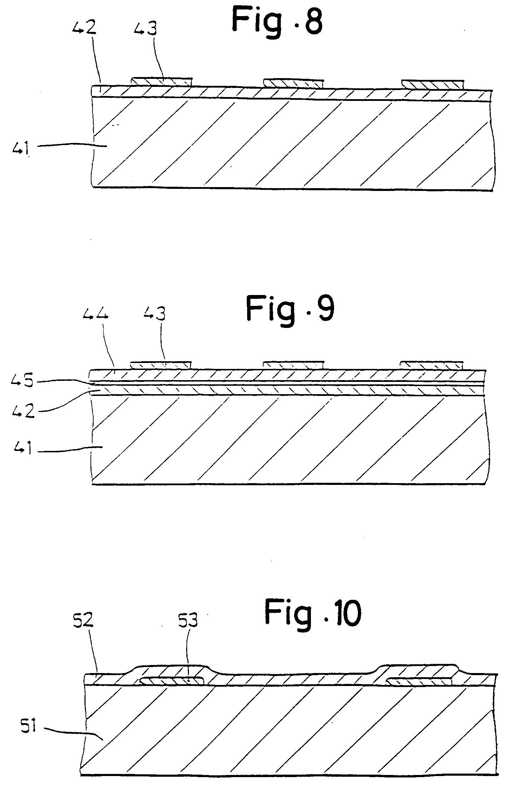

The resin-coated metal according to the second invention will now be described in more detail with reference to an embodiment shown in Fig. 8.

The resin-laminated metal comprises a metal plate 41, a fluororesin layer 42 laminated on the surface of the metal plate by thermal fusion and a printed layer 43 laminated on the surface of the fluororesin layer 42.

There is no particular limitation on the thickness of the metal plate 41, and the thickness may be arbitrarily varied. Further, although the thicknesses of the fluororesin layer 42 and the printed layer 43 as well are not particularly limited, the former and the latter are preferably 5 to 1,000 $\mu$m and 1 to 100 $\mu$m, respectively.

There is no particular limitation on the method of producing the resin-laminated metal, and any method may be used. For example, the resin-laminated metal may be prepared by a method which comprises thermally fusing a fluororesin film on the surface of a metal plate 41 subjected to a predetermined surface treatment to form a fluororesin layer 42 and then conducting printing through the use of an ink which will be described later, thereby forming a printed layer 43, and a method which comprises preparing a fluororesin film having a printed layer 43 previously formed thereon and thermally fusing the fluororesin film on the metal plate in the same manner as that described above.

The above-described embodiment of the resin-laminated metal will now be described in mote detail.

Various metals may be used as the metallic material constituting the metal plate 41. Among others, it is preferred to use aluminum alone, aluminum-base metals such as various aluminum alloys and aluminum metal containing a minor amount of manganese or magnesium. It is also possible to use, besides the above-described metals, iron-base metals, copper-base metals, titanium-base metals, etc.

In order to improve the adhesive force of the fluororesin layer, it is preferred that the metal plate 41 be previously subjected to a surface treatment, such as cleaning (degreasing or the like) or roughening (sandblasting, chemical etching or the like).

Examples of the fluororesin constituting the fluororesin layer 42 include ethylene/tetrafluoroethylene copolymer, trifluoroethylene copolymer, vinylidene fluoride copolymer, vinyl fluoride polymer, fluoroalkoxyethylege resin, tetrafluoroethylene resin and tetrafluoroethylene/hexafluoroethylene copolymer, among which the ethylene/tetrafluoroethylene copolymer is preferred, and especially preferred is one having a tetrafluoroethylene to ethylene molar ratio of 40/60 to 60/40, a content of a perfluoroalkyl vinyl monomer represented by the general formula $CH_2 = CH\text{-}C_nF_{2n+1}$ (wherein n is an integer of 2 to 10) of 0.1 to 10% by mole and a volume flow rate of 10 to 500 mm$^3$/sec. The volume flow rate is measured by extruding 1 g of a sample through a nozzle having a diameter of 1 mm and a land length of 2 mm at a predetermined temperature under a predetermined load of 30 kg/cm$^2$ by means of a Koka flow tester and expressed by the volume of a molten sample extruded per unit time. The above-described predetermined temperature is a temperature falling within a temperature region where the sample resin can be melt-molded (that is, a temperature ranging from the flow initiation temperature to the thermal decomposition initiation temperature), and near the flow initiation temperature.

It is preferred that the ethylene/tetrafluoroethylene copolymer have the above-described volume flow rate because a good fluororesin layer 42 having a high bonding strength can be obtained thereby. When this copolymer is used, it is preferred to conduct the thermal fusion at a temperature of 260 to 360°C.

The ink used for forming the printed layer 43 comprises a fluororesin composition.

This composition (ink) is one having a thixotropy index (TI value) regulated to 2 to 8, preferably 3 to 7, still preferably 4 to 6, and mainly composed of a fluororesin, a solvent, a thixotropic agent and a pigment or a dye and, if necessary, various other additives.

The TI value is expressed by the ratio of viscosity $N_2$ to viscosity $N_{20}$, that is, $TI = N_2/N_{20}$, wherein $N_2$ and $N_{20}$ are viscosities respectively measured at 25°C at the number of revolutions of 2 and 20 through the use of a No. 7 rotor by means of a BH viscometer.

Each component of the above-described fluororesin composition will now be described.

The fluororesin is a generic term of synthetic resins prepared by the polymerization of a fluorinated olefin and, in general, a fluororesin having a fluorine content of 45% by weight or more, particularly 50% by weight or more, is preferably used in the present invention. Examples of the fluororesin of this type include ethylene/tetrafluoroethylene copolymer, ethylene/chlorotrifluoroethylene copolymer, hexafluoropropylene/tetrafluoroethylene copolymer, perfluoroalkyl vinyl ether/tetrafluoroethylene copolymer, polyvinylidene fluoride and polyvinyl fluoride. Although any of them may be used in the present invention, the ethylene/tetrafluoroethylene copolymer is particularly preferred. Among others, a fluorocarbon copolymer comprising as indispensable components a fluorpolefin, cyclohexyl vinyl ether, an alkyl vinyl ether and a hydroxyalkyl vinyl ether is preferred, and particularly preferred is one comprising 40 to 60% by mole of fluoroolefin units, 5 to 45% by mole of cyclohexyl vinyl ether units, 5 to 45% by mole of alkyl vinyl

7

ether units, 5 to 15% by mole of hydroxyalkyl vinyl ether units and 0 to 30% by mole of other comonomers and having an intrinsic viscosity of 0.1 to 2.0 dl/g as measured in an uncured state at 30°C in tetrahydrofuran. In these fluorocarbon copolymers, it is further preferred that the fluoroolefin be a perfluoroolefin, such as chlorotrifluoroethylene or tetrafluoroethylene, the alkyl vinyl ether contain a straight-chain or branched alkyl group having 2 to 8 carbon atoms and the hydroxyalkyl vinyl ether be hydroxybutyl vinyl ether.

The solvent is one having a boiling point of 120 to 230°C. Preferred examples of the solvent include the following.

| | |
|---|---|
| Aliphatic hydrocarbon: | mineral spirit. |
| Aromatic hydrocarbon: | xylene, solvent naphtha, tetralin, dipentene and toluene. |
| Alcohol: | cyclohexyl alcohol and 2-methylcyclohexyl alcohol. |
| Ester: | butyl acetate. |
| Ketone: | cyclohexanone, methylcyclohexanone, diacetone alcohol and isophorone. |
| Glycol: | ethylene glycol and propylene glycol. |
| Glycol ether: | methyl Cellosolve (ethylene glycol monomethyl ether), Cellosolve (ethylene glycol monoethyl ether), butyl Cellosolve and Carbitol. |
| Glycol ether ester: | Cellosolve acetate, butyl Cellosolve acetate and Carbitol acetate (diethylene glycol monoethyl ether acetate). |

Examples of the thixotropic agent include colloidal silica (Aerosil #400), aluminum alcoholate, organic bentonite, aluminum chelate and barium sulfate.

Examples of the pigment and dye include the following, and the pigment and the dye may be properly selected from them and used depending upon the applications.

Examples of the pigment include inorganic pigments such as titanium oxide, carbon black, red oxide, iron black, iron blue, ultramarine blue, zinc flower, chrome yellow, chrome vermilion, cobalt blue, fired green, zinc sulfide, bronz powder, aluminum powder and pearl pigment, organic pigments such as insoluble azo pigments, azo lakes, quinacridone red, carmine red, watching red, condensed azo red, perylene red, anthraquinone, disazo orange, dinitroaniline orange, acetolone orange, disazo yellow, hansa yellow, acetolone yellow, chlorinated phthalocyanine, brilliant green lake, phthalocyanine, indanthrene blue, dioxazine violet, methyl violet, fluorescent pigments and phosphorescent pigments, and extender pigments such as precipitated barium sulfate, calcium carbonate, alumina white and clay. Ordinary acid dyes, basic dyes, oil soluble dyes and disperse dyes may be used as the dye. Preferred examples of the oil soluble dye include azo, triarylmethane, anthraquinone and azine dyes.

Examples of the other additives include gelling agents, tackifiers, antioxidants, antifoaming agents, delustering agents, ultraviolet absorbers and light stabilizers.

Polyisocyanate, butylated melamine and aluminum chelate are used as a crosslinking agent, and dibutyltin laurate or the like is used as a curing catalyst.

In the present invention, the fluororesin composition (ink) comprises the above-described individual components in such blending proportions that the solvent and the thixotropic agent are respectively 50 to 150 parts by weight and 2 to 10 parts by weight based on 100 parts by weight of the fluororesin. To this composition are added suitable amounts of a pigment or a dye (usually 10 to 400 parts by weight) and other additives depending upon the purposes and applications and further 10 to 25 parts by weight of a crosslinking agent and a curing catalyst. In blending the above-described components, it is necessary to select individual components and amounts of blending the components so that the thixotropic index of the resultant fluororesin composition is 2 to 8. The thixotropic index can be determined mainly depending upon the thixotropic agent and solvent and the amount of blending thereof.

Although any means may be used for forming the printed layer 43 as far as a thin film of the fluororesin composition can be formed in an adhered state, it is preferred to use a method wherein an ink comprising the above-described fluororesin composition is applied through screen printing to the fluororesin layer 42 or a fluororesin film used for forming the resin layer 42. A specific method of forming the printing layer 43 will now be described through an embodiment wherein the printed layer is formed on a fluororesin film. It is needless to say that this is also true of the case where printing is conducted on the fluororesin layer 42 after the thermal fusion of the fluororesin layer 42.

A fluororesin film having a thickness of, for example, 5 to 1,000 μm is used as the fluororesin film, and the screen used in the screen printing is preferably one having an opening size of, for example, 100 to 300 mesh for the purpose of forming a thin film (dried printed layer) of the fluororesin composition having a thickness of 1 to 100 μm:

Prior to the printing with the above-described ink on the fluororesin layer 42 or the fluororesin film, the surface of the fluororesin layer 42 or fluororesin film is preferably subjected to a corona discharge treatment, a blast finish, a sodium etching treatment or the like to activate the surface so as to give a wetting index of 35 dyn or more from the viewpoint of enhancing the adhesion.

Accordingly, in order to form the printing layer 43 in the resin-laminated metal of the above-described first embodiment through screen printing, the fluororesin composition (ink) may be applied to the fluororesin layer 42 or fluororesin film treated as described above through the use of the screen as described above by the conventional procedure. In this case, when the thixotropic index of the fluororesin composition is less than 3, there occur unfavorable phenomena such as poor plate sharpness and stringiness. On the other hand, when the thixotropic index exceeds 8, there occur unfavorable phenomena such as the formation of a hollow and a lowering in the self-levelling property.

In the resin-laminated metal of the present invention thus prepared, when the printed layer 43 comprising the thin film of the fluororesin composition having a thixotropic index of 2 to 8 is formed on the fluororesin layer 42 or fluororesin film, the adhesion between the printed layer and the fluororesin layer or fluororesin film is excellent. Therefore, it is possible to provide a resin-laminated metal comprising a metal, a fluororesin layer 42 thermally fused on the surface of the metal and a firm printed layer 43 in the form of characters, figures or the like.

Another embodiment of the second invention will now be described with reference to Fig. 9.

The resin-laminated metal of the present embodiment comprises a metal plate 41 and a fluororesin layer 42 thermally fused on the metal plate as with the above-described embodiment shown in the Fig. 8 and further a second fluororesin layer 44 laminated on the fluororesin layer 42 through an adhesive layer 45 and a printed layer 43 formed on the surface of the second fluororesin layer 44. This resin-laminated metal can be produced by laminating a film constituting a second fluororesin layer 44 on the fluororesin layer 42 by means of an adhesive and then conducting printing on the fluororesin layer 44. Alternatively, it can be produced by laminating a fluororesin film having a printed layer 43 previously formed thereon on the fluororesin layer 42 by means of an adhesive. The lamination of a previously printed fluororesin film by means of an adhesive is particularly suitable for application to the case where the surface of the metal plate 41 is surely protected by coating it with a fluororesin layer 42, before characters, figures or the like are printed on part of the fluororesin layer.

In the above-described another embodiment of the resin-laminated metal, the metal plate 41, the thermally fused fluororesin layer 42 and the printed layer 43 are the same as those of the above-described embodiment shown in the Fig. 8. Further, the second fluororesin layer 44 may be formed through the use of, for example, the same fluororesin as that constituting the thermally fused fluororesin layer 42.

Although there is no particular limitation on the adhesive layer 45 used for laminating the second fluororesin layer 44, it is preferred to form the adhesive layer through the use of an adhesive composition comprising an adhesive resin component having a glass transition temperature of -100 to $+50°C$ which will be described in detail hereinbelow and, incorporated therein, a material capable of absorbing ultraviolet rays and a material capable of preventing photo-oxidation for the purpose of maintaining a stable adhesive force for a long period of time.

The adhesive resin component constituting the above-described adhesive composition should have a glass transition temperature of -100 to $+50°C$, especially -80 to $-20°C$. When the glass transition temperature is below $-100°C$, the cohesive force lowers unfavorably, while when it is above $+50°C$, the impact resistance lowers unfavorably.

There is no particular limitation on the above-described adhesive resin component as far as the component is a synthetic resin useable as a pressure sensitive adhesive or an adhesive. Examples thereof include synthetic resins such as acrylic, urethane, ethylene-vinyl acetate and silicone synthetic resins. Among them, the acrylic resin is preferred.

Specific examples of the monomer constituting the acrylic resin include ethyl acrylate, n-propyl acrylate, n-butyl acrylate, isobutyl acrylate, n-hexyl acrylate, 2-ethylhexyl acrylate, n-octyl acrylate and 2-methylbutyl acrylate.

In the acrylic resin, n-butyl acrylate, 2-ethylhexyl acrylate, ethyl acrylate or i-nonyl acrylate as a man monomer is copolymerized with acrylic acid, methacrylic acid, acrylamide, N-methylolacrylamide or the like as an auxiliary monomer (a functional group), and the weight ratio of the main monomer to the auxiliary monomer may be in the range of from 99 : 1 to 70 : 30.

More specifically, in the case of a butyl acrylate (BA)/acrylic acid (AA) copolymer, the mixing ratio of the BA to AA (by weight) is 99.1 : 0.1 to 70 : 30, still preferably 99.5 : 0.5 to 80 : 20.

Examples of the material capable of absorbing ultraviolet rays applicable to the above-described adhesive composition include various ultraviolet absorbers based on cyanoacrylate, benzotriazole, benzophenone, salicylic acid or hydroquinone and further ultraviolet absorbing polymers prepared by reacting a reactive ultraviolet absorber with a polymer or by polymerizing a mixture of a reactive ultraviolet absorber

EP 0 481 075 A1

with a monomer.

Among the above-described ultraviolet absorbers, the one based on the benzotriazole is favorable, and examples thereof include 2-(3,5-di-tert-butyl-2-hydroxyphenyl)benzotriazole, 2-[2-hydroxy-3,5-bis($\alpha$,$\alpha$-dimethylbenzyl)phenyl]-2H-benzotriazole and 2-(3,5-di-tert-amyl-2-hydroxyphenyl)benzotriazole.

Examples of the benzophenone ultraviolet absorber include 2-hydroxy-4-octoxybenzophenone, 2,4-dihydroxybenzophenone and 2-hydroxy-4-methoxy-2'-carboxybenzophenone.

Examples of the salicylic acid ultraviolet absorber include phenyl salicylate, p-octylphenyl salicylate, resorcinol monobenzoate and 4-tert-butylphenyl salicylate.

Examples of the cyanoacrylate ultraviolet absorber include ethyl 2-cyano-3,3-diphenylacrylate and 2-ethylhexyl 2-cyano-3,3-diphenylacrylate.

The above-described material capable of absorbing ultraviolet rays preferably has a maximum absorption wavelength at 340 to 353 nm, still preferably at 343 to 346 nm.

Although the amount of blending of the material capable of absorbing ultraviolet rays varies depending upon the kind of the material and is not particularly limited, it is preferably 0.5 to 10 parts by weight, still preferably 0.6 to 2.5 parts by weight based on 100 parts by weight (on the solid basis) of the adhesive resin component from the viewpoint of sufficiently attaining the performance of the material.

Examples of the material capable of preventing photo-oxidation applicable to the present invention include antioxidants based on hindered amines or hindered phenols. Among them, the hindered amine antioxidants are preferred.

Although there is no particular limitation on the hindered amine antioxidant, preferred examples thereof include one having a high molecular weight and an N-substituted piperidinol nucleus.

The molecular weight of the hindered amine antioxidant is preferably 400 to 10,000, still preferably 500 to 5000.

Specific examples of the hindered amine antioxidant include a high molecular weight ester of butanetetracarboxylic acid with N-substituted piperidinol, and specific preferred examples thereof include Mark LA-63 (trade name of a product manufactured by Adeka Argus Chemical Co., Ltd.), Mark LA-62 (trade name of a product manufactured by Adeka Argus Chemical Co., Ltd.), Tinuvin 622LD (trade name of a product manufactured by Ciba-Geigy Limited, Japan). The occurrence of bleedout can be prevented through the use of the high molecular weight hindered amine antioxidant, so that it becomes possible to maintain the performance for a long period of time.

Although the amount of blending of the material capable of preventing photo-oxidation as well varies depending upon the kind of the material and is not particularly limited, it is preferably 0.1 to 5 parts by weight, still preferably 0.3 to 3 parts by weight based on 100 parts by weight (on the solid basis) of the adhesive resin component from the viewpoint of sufficiently attaining the performance of the material.

It is needless to say that the above-described adhesive composition may comprise, besides the above-described indispensable components, components usually employed in the art, for example, solvents such as ethyl acetate and ethyl acetoacetate, various pigments and dyes, crosslinking agents and crosslinking accelerators.

Examples of the crosslinking agent include isocyanate compounds, epoxy compounds, melamines and aluminum chelates, and examples of the accelerator include dibutyltin laurate.

Specific preferred examples of formulation of the above-described adhesive composition are given in the following Table 1.

10

## Table 1

(unit: part)

| | Formulation | | | |
|---|---|---|---|---|
| | 1 | 2 | 3 | 4 |
| acrylic resin (main pressure sensitive adhesive) | 100 | 100 | 100 | 100 |
| ultraviolet absorber | T-320 0.7 | T-328 1.4 | T-234 0.7 | T-234 0.7 |
| light stabilizer | LA-63 0.35 | LS-622LD 0.70 | LA-63 0.35 | LA-63 0.35 |
| C-EH | 0.12 | 0.12 | 0.12 | 0.12 |
| tert-BuOH | 5.0 | 5.0 | 5.0 | 5.0 |
| ethyl acetate | 35 | 35 | 35 | 35 |

In the Table 1,

the acrylic resin (main pressure sensitive adhesive) is a pressure sensitive adhesive comprising a copolymer composed of butyl acrylate and acrylic acid in a ratio of 97 : 3 and having a solid content of 34% by weight;

T-320 is 2-(3,5-di-tert-butyl-2-hydroxyphenyl)benzotriazole having a maximum absorption wavelength at 343 nm (manufactured by Ciba-Geigy Limited);

T-328 is 2-(3,5-di-tert-amyl-2-hydroxyphenyl)benzotriazole (manufactured by Ciba-Geigy Limited);

T-234 is 2-12-hydroxy-3,5-bis($\alpha,\alpha$-dimethylbenzyl)phenyl]-2H-benzotriazole (manufactured by Ciba-Geigy Limited);

Mark LA-63 is a hindered amine antioxidant having a molecular weight of 2060 (manufactured by Adeka Argus Chemical Co., Ltd.); and

C-EH is hexamethylene diisocyanate (manufactured by Nippon Polyurethane Industry Co., Ltd.).

The resin-laminated metal of the present invention has been described with respect to an embodiment wherein the metal base material comprises a metal plate shown in the Figs. 7 and 8. The metal base material, however, is not limited to this only, and may be in any form as far as a fluororesin layer can be laminated thereon through thermal fusion.

The effect of the present invention will now be demonstrated through the following Experimental Examples.

[Experimental Examples]

There was prepared a 20 $\mu$m-thick nonporous white film formed by the thermal melt extrusion of an ethylene/tetrafluoroethylene copolymer having a tetrafluoroethylene to ethylene molar ratio of 53 : 47, a flow initiation temperature of 280°C, a thermal decomposition initiation temperature of 350°C and a volume flow rate of 90 mm$^2$/sec at 300°C.

Separately, one surface of a 2.0 mm-thick rolled plate of aluminum of 1100 series specified in JIS H-4000 was sandblasted to give an average depth of the uneven portion (surface roughness) of 10 to 15 $\mu$m and an interval of appearance of the uneven portion of 10 to 20 $\mu$m. Thereafter, the other surface was masked with a vinyl chloride resin, and the sandblasted surface was subjected to electrolytic etching. The electrolytic etching was conducted through the use of a 3% aqueous NaCl solution at a temperature of 40°C, an electrolytic current density of 4 A/dm$^2$ and an amount of energization of 35 C/cm$^2$.

After the etched face was washed with water and dried, the aluminum plate was preheated to 310°C and the white film was press-bonded to the etched face under a pressure of 20 kg/cm$^2$. Subsequently, the laminate was heat-treated at 315°C for 10 min, thereby conducting thermal fusion to form a fluororesin layer on the aluminum plate.

Then, the fluororesin layer was subjected to a surface treatment through the use of a corona discharge apparatus (manufactured by Kasuga Denki K.K.) under the condition of a discharge power of 120 W/m$^2$•min to activate the surface of the fluororesin layer until the wetting index reached 42 dyn.

Thereafter, 10 g of hexamethylene diisocyanate was well mixed with 100 g of an ink composition prepared by the following method of preparing an ink composition, and the resultant composition (viscosity: 570 P, TI value: 5) was used in the printing on the above-described fluororesin layer comprising an ethylene/tetrafluoroethylene copolymer through the use of a 270-mesh Tetoron screen. The print was heat-dried for 10 min in a drier with internal air circulation at 120°C to prepare a resin-laminated metal (a product of the present invention) comprising the fluororesin layer and, formed thereon, a 10 $\mu$m-thick printed layer of a thin film composed of the ink.

For comparison, a resin-laminated metal (comparative product 1) was prepared in the same manner as that used in the preparation of the above-described product of the present invention, except that the following acrylic-urethane ink was used as the ink, and a resin-laminated metal (comparative product 2) was prepared in the same manner as that used in the preparation of the above-described product of the present invention, except that no corona discharge treatment of the fluororesin layer was conducted.

The above-described product of the present invention, comparative product 1 and comparative product 2 were subjected to evaluation of the performance. The results are given in the following Table 2.

(Method of Preparing Ink Composition)

A copolymer comprising tetrafluoroethylene, cyclohexyl vinyl ether, ethyl vinyl ether and hydroxybutyl vinyl ether was prepared by the conventional procedure. In the copolymer, the molar ratio of the individual components was 50 : 18 : 22 : 10 (as determined by nuclear magnetic resonance spectrometry), and the intrinsic viscosity was 0.4 dl/g as measured at 30°C in tetrahydrofuran. 100 g of the copolymer was dissolved in a mixture of 80 g of Carbitol acetate with 20 g of toluene, and 300 g of titanium and 6 g of colloidal silica were added thereto. They were sufficiently mixed with each other by means of a triple roll mill to prepare an ink composition. The composition had a viscosity of 570 P and a TI value of 5.

(Acrylic-urethane ink)

According to the conventional procedure, an acryl/polyol copolymer (hydroxyl value: 50, number average molecular weight: 15000) comprising 34 parts by weight of styrene, 38 parts by weight of n-butyl acrylate, 23.4 parts by weight of 2-hydroxyethyl acrylate and 0.4 part by weight of acrylic acid and Coronate HL were dissolved in a molar ratio of 1 : 1.5 in xylene, and 20% of titanium oxide was added thereto to prepare an ink.

## Table 2

| | | Discharge treatment (dyn) | Tape peeling | Weather resist- ance | Bending work- ability |
|---|---|---|---|---|---|
| Product of present invention | fluoro- resin compsn. | 42 | 100/ 100 | ○ | ○ |
| Comp. product 1 | acrylic urethane thane ink | 42 | 60/ 100 | △ | ○ |
| Comp. product 2 | fluoro- resin compsn. | not conducted | 10/ 100 | △ | ○ |

In the Table 2, the tape peeling, weather resistance and bending workability were evaluated according to the following criterion.

Tape peeling: 10 vertical crosscuts and 10 horizontal crosscuts were provided at intervals of 1 mm to form 100 squares, and the number of squares remaining unpeeled after the cellophane tape peeling test for the squares is given in the numerator.

Weather resistance: A 5000-hr Acceleration exposure test was conducted through the use of a WS type sunshine carbon (manufactured by Suga Test Instruments Co., Ltd.) specified in JIS A 1415-1977. A change in the appearance was determined through a comparison with the appearance of a stored test piece. ○ indicates that the appearance was substantially the same as that of the stored test piece. △ indicates that the appearance changed and was different from that of the stored test piece.

Bending workability: A round steel bar having a diameter of 2 mm was provided at the center of a test piece having a length of 100 mm, a width of 50 mm and a thickness of 2 mm. Bending of 180° was conducted through the use of the round bar as a fulcrum to observe the occurrence of cracking and peeling. ○ indicates that neither cracking nor peeling was observed.

As is apparent from the Table 2, the resin-laminated metal according to the present invention exhibits very excellent performance.

(Detailed Description of the Third Invention)

The resin-coated metal according to the third invention will now be described with reference to an embodiment shown in Fig. 10.

The resin-coated metal comprises a metal plate 51, a fluororesin layer 52 thermally fused on the surface of the metal plate and a printed layer 53 formed between the fluororesin layer 52 and the metal plate 51.

The thickness of the metal plate 51 is not particularly limited and may be varied. The thicknesses of the fluororesin layer 52 and the printed layer 53 as well are not particularly limited and preferably 5 to 1000 $\mu$m and 1 to 100 $\mu$m, respectively.

There is no particular limitation on the method of preparing the resin-coated metal, and it can be prepared in the same manner as that used in the preparation of the resin-coated metal according to the second invention.

The metallic material constituting the metal plate 51 and the fluororesin constituting the fluororesin layer 52 may be the same as those used in the above-described resin-coated metal according to the second invention.

The ink used for forming the printed layer 53 comprises the following resin composition.

Said resin composition (ink) contains a solid component (the composition exclusive of the solvent component) with a melt flow index regulated to 10 to 500, preferably 20 to 400, still preferably 30 to 300, and is mainly composed of a resin, a solvent, a thixotropic agent and a pigment or a dye and, if necessary, various other additives. The melt flow index is measured in the same manner as that in the case of the fluororesin constituting the fluororesin layer 52. Specifically, it is defined as a volume of a molten sample extruded per unit time ($mm^2$/sec) when 1 g of a sample is melt-extruded through a nozzle having a diameter of 1 mm and a land length of 2 mm at a predetermined temperature under a predetermined load of 30 $kg/cm^2$ by means of a Koka flow tester. The predetermined temperature is a temperature falling within a temperature region where the sample resin can be melt-molded, and near the flow initiation temperature.

When the melt flow index is less than 10, the adhesion to the metal plate in the thermal fusion lowers unfavorably. On the other hand, when it exceeds 500, the print such as characters or figures, bleeds unfavorably.

The resin composition is preferably regulated to have a thixotropic index (TI value) of 2 to 8, preferably 3 to 7, still preferably 4 to 6. The TI value is expressed by the ratio of viscosity $N_2$ to viscosity $N_{20}$, that is, $TI = N_2/N_{20}$, wherein $N_2$ and $N_{20}$ are viscosities respectively measured at 25°C at the number of revolutions of 2 and 20 through the use of a No. 7 rotor by means of a BH viscometer.

Each component of the fluororesin composition will now be described.

Examples of the fluororesin include one prepared by the polymerization of a fluorinated olefin and, in general, a fluororesin having a fluorine content of 30% by weight or more, particularly 40% by weight or more, is preferably used in the present invention. Examples of the fluororesin of this type include ethylene/tetrafluoroethylene copolymer, ethylene/chlorotrifluoroethylene copolymer, hexafluoropropylene/tetrafluoroethylene copolymer, perfluoroalkyl vinyl ether/tetrafluoroethylene copolymer, polyvinylidene fluoride and polyvinyl fluoride. Although any of them may be used in the present invention, the ethylene/tetrafluoroethylene copolymer used in the second invention is preferred.

The resin is not limited to the above-described fluororesin and may be other resin, for example, an acrylic-urethane resin.

The solvent, thixotropic agent, pigment or dye and various additives, crosslinking agent or curing catalyst constituting the resin composition (ink) may be the same as those used in the second invention.

The resin composition (ink) in the present invention comprises the above-described individual components, and according to a preferred formulation, it comprises 100 parts by weight of a resin, 50 to 150 parts by weight of a solvent and 2 to 10 parts by weight of a thixotropic agent. To this composition are added suitable amounts of a pigment or a dye (usually 10 to 400 parts by weight) and other additives depending upon the purposes and applications and further 10 to 25 parts by weight of a crosslinking agent and a curing catalyst. In blending the these components, it is necessary to select individual components and amounts of blending the components so that the melt flow index of the resultant fluororesin composition is 10 to 500.

The printed layer 53 as well may be formed in the same manner as that used in the second invention.

The film (not shown in the figure) having a printed layer 53 formed on one surface thereof is put on the surface of the metal plate 51 subjected to a predetermined surface treatment with the printed layer 53 facing inside, and heated at a predetermined temperature, for example, 260 to 360°C, to conduct thermal fusion, thereby preparing the resin-coated metal according to the present invention.

In the present invention, since the ink constituting the printed layer 53 comprises a fluororesin composition wherein the melt flow index of the solid component is 10 to 500, it is possible even in the thermal fusion to maintain a sharp print pattern and, at the same time, to firmly bond the printed layer to the surface of the metal through thermal fusion.

Therefore, it is possible to prepare a resin-coated metal comprising a metal, a fluororesin layer 52 thermally fused on the surface of the metal and a firm printed layer 53 in the form of characters, figures or the like interposed between the surface of the metal and the resin layer 52, the printed layer 53 being protected from the outside and less susceptible to peeling.

The resin-coated metal of the present invention has been described with respect to an embodiment wherein the metal base material comprises a metal plate shown in the Fig. 10. The metal base material, however, is not limited to this only, and may be in any form as far as a fluororesin layer can be laminated

14

thereon through thermal fusion.

The effect of the present invention will now be demonstrated through the following Experimental Examples.

[Experimental Examples]

There was prepared a 20 $\mu$m-thick nonporous transparent film formed by the thermal melt extrusion of an ethylene/tetrafluoroethylene copolymer having a tetrafluoroethylene to ethylene molar ratio of 53 : 47, a flow initiation temperature of 280°C, a thermal decomposition initiation temperature of 350°C and a volume flow rate of 90 mm$^2$/sec at 300°C.

Then, the film was subjected to a surface treatment through the use of a corona discharge apparatus (manufactured by Kasuga Denki K.K.) under the condition of a discharge power of 120 W/m$^2$·min to activate the surface of the fluororesin layer until the wetting index reached 42 dyn. Thereafter, an ink 1 (viscosity: 570 P, TI value: 5) prepared by the following method of preparing an ink was used in the printing on the transparent film comprising an ethylene/tetrafluoroethylene copolymer through the use of a 270-mesh Tetoron screen. The print was heat-dried for 10 min in a drier with internal air circulation at 120°C to prepare a printed film comprising the fluororesin layer and, formed thereon in a bonded state, a 10 $\mu$m-thick printed layer of a thin film composed of the ink.

Separately, one surface of a 2.0 mm-thick rolled plate of aluminum of 1100 series specified in JIS H-4000 was sandblasted to give an average depth of the uneven portion (surface roughness) of 10 to 15 $\mu$m and an interval of appearance of the uneven portion of 10 to 20 $\mu$m. Thereafter, the other surface was masked with a vinyl chloride resin, and the sandblasted surface was subjected to electrolytic etching. The electrolytic etching was conducted through the use of a 3% aqueous NaCl solution at a temperature of 40°C, an electrolytic current density of 4 A/dm$^2$ and an amount of energization of 35 C/cm$^2$.

After the etched face was washed with water and dried, the aluminum plate was preheated to 310°C and the transparent film was press-bonded to the eached face under a pressure of 20 kg/cm$^2$. Subsequently, the laminate was heat-treated at 315°C for 10 min, thereby conducting thermal fusion to form a resin-coated metal (a product 2 of the present invention) comprising the fluororesin layer formed on the aluminum plate and the printed layer laminated on the reverse surface of the fluororesin layer.

Products 3 and 4 of the present invention were prepared in the same manner as that used in the preparation of the product 1 of the present invention, except that an ink 2 prepared by the following method of preparing an ink and an acrylic-urethane ink were used. Further, for comparison, a resin-coated metal (comparative product 3) was prepared in the same manner as that described above, except that the printed layer was formed on the surface of the fluororesin layer through the use of the ink 1, and a resin-coated metal (comparative product 4) was prepared in the same manner as that used in the preparation of the comparative product 1, except that the acrylic-urethane ink was used.

The products 2 and 3 according to the present invention and the comparative products 3 and 4 were subjected to evaluation of the performance. The results are given in the following Table 3.

(Method of Preparing Ink Composition)

- Ink 1 -

A copolymer comprising tetrafluoroethylene, cyclohexyl vinyl ether, ethyl vinyl ether and hydroxybutyl vinyl ether was prepared by the conventional procedure. In the copolymer, the molar ratio of the individual components was 50 : 18 : 22 : 10 (as determined by nuclear magnetic resonance spectrometry), and the intrinsic viscosity was 0.4 dl/g as measured at 30°C in tetrahydrofuran. 100 g of the copolymer was dissolved in a mixture of 80 g of Carbitol acetate with 20 g of toluene, and 50 g of titanium and 6 g of colloidal silica were added thereto. They were sufficiently mixed with each other by means of a triple roll mill to prepare an ink composition. The composition had a viscosity of 270 P and a TI Value of 5.

- Ink 2 (PVdF ink) -

100 g of polyvinylidene fluoride was dissolved at 60°C in 200 g of dimethylacetamide while stirring to prepare a polyvinylidene fluoride solution having a solid content of 33%. 50 g of titanium oxide and 3 g of colloidal silica were added thereto, and they were sufficiently mixed with each other by means of a triple roll mill to prepare an ink composition.

The composition had a viscosity of 300 P and a TI value of 4.

15

(Acrylic-urethane ink)

According to the conventional procedure, an acryl/polyol copolymer (hydroxyl value: 50, number average molecular weight: 15000) comprising 34 parts by weight of styrene, 38 parts by weight of n-butyl acrylate, 23.4 parts by weight of 2-hydroxyethyl acrylate and 0.4 part by weight of acrylic acid and Coronate HL were dissolved in a molar ratio of 1 : 1.5 in xylene, and 20% of titanium oxide was added thereto to prepare an ink.

In Table 3, the T-bar abrasion; weather resistance and bending workability were evaluated according to the following criterion.

Table 3

|  | Ink | Position of printing | T-bar abra-sion | Weather resist-ance | Bending work-ability |
|---|---|---|---|---|---|
| Product 2 of present invention | ink 1 | rear printing | ◎ | ◎ | ◎ |
| Product 3 of present invention | ink 2 | do. | ◎ | ◎ | ◎ |
| Product 4 of present invention | acrylic urethane ink | do. | ◎ | ○ | ○ |
| Comp. product 3 | ink 1 | surface printing | Δ | ○ | ○ |
| Comp. product 4 | acrylic urethane ink | do. | X | ○ | Δ |

T-bar abrasion: An abrasion test was conducted through the use of an abrasion tester specified in JIS K 7204 under the conditions of a load of 500 gf and the number of revolutions of 1000. ◎, Δ and X represent excellent abrasion resistance, slightly poor abrasion resistance and poor abrasion

17

resistance, respectively.

Weather resistance: A 5000-hr acceleration exposure test was conducted through the use of a WS type sunshine carbon (manufactured by Suga Test Instruments Co., Ltd.) specified in JIS A 1415-1977. A change in the appearance was determined through a comparison with the appearance of a stored test piece. ⊚ indicates that the appearance was substantially the same as that of the stored test piece. ○ indicates that the appearance slightly changed and was different from that of the stored test piece.

Bending workability: A round steel bar having a diameter of 2 mm was provided at the center of a test piece having a length of 100 mm, a width of 50 mm and a thickness of 2 mm. Bending of 180° was conducted through the use of the round bar as a fulcrum to observe, the occurrence of cracking and peeling. ⊚, ○ and Δ represent occurrence of neither cracking nor peeling, occurrence of cracking or peeling to a small extent and occurrence of cracking or peeling to a considerable extent, respectively.

As is apparent from the Table 3, the resin-laminated metals according to the present invention exhibit very excellent performance.

Industrial Applicability

The wall-forming structural material of the present invention (the first invention) enables a wall structure

18

having an appearance suggestive of high quality like a brick wall and excellent in weathering, staining and falling resistances to be formed by simple means, and the wall structure of the present invention formed of said wall forming structural material exhibits an appearance of block masonry such as a brick wall.

The resin-laminated metal of the present invention (the second invention) comprises a metal, a fluororesin layer thermally fused on the surface of the metal and a printed layer firmly laminated on the fluororesin layer.

The resin-coated metal of the present invention (the third invention) comprises a metal, a fluororesin layer thermally fused on the surface of the metal and a printed layer firmly laminated between the resin layer and the surface of the metal.

**Claims**

1. A wall-forming structural material produced by molding a laminate comprising a metal plate and a synthetic resin film stuck to the surface of the metal plate in such a manner that at least one block-like unit projects beyond the surface side of the metal plate.

2. A wall-forming structural material according to claim (1), wherein said synthetic resin film is a fluororesin film.

3. A wall-forming structural material according to claim (1), wherein said metal plate is an aluminum plate.

4. A resin-laminated metal characterized by comprising a metal, a fluororesin layer thermally fused on the surface of the metal and, as the uppermost layer, a printed layer formed by means of an ink comprising a fluororesin composition having a thixotropic index (TI value) of 2 to 8.

5. A resin-laminated metal according to claim (4), wherein a fluororesin film having a printed layer formed thereon is laminated on the thermally fused fluororesin layer through an adhesive layer.

6. A resin-laminated metal according to claim (4), wherein said metal is aluminum or an aluminum-base alloy.

7. A resin-coated metal characterized by comprising a metal and a fluororesin film having a printed layer thermally fused on the surface of the metal with said printed layer facing inside.

8. A resin-coated metal according to claim (7), wherein said printed layer is formed through the use of an ink comprising a resin composition containing a solid component having a melt flow index of 1 to 500.

9. A resin-coated metal according to claim (8), wherein said resin composition is a fluororesin composition.

10. A resin-coated metal according to claim (7), wherein said metal is aluminum or an aluminum-base alloy.

Fig.1

Fig.2

Fig .3

EP 0 481 075 A1

# Fig .4

# Fig .5

# Fig .6

# Fig .7

## Fig . 8

## Fig . 9

## Fig . 10

# INTERNATIONAL SEARCH REPORT

International Application No PCT/JP90/00462

## I. CLASSIFICATION OF SUBJECT MATTER (if several classification symbols apply, indicate all) [6]

According to International Patent Classification (IPC) or to both National Classification and IPC

Int. Cl$^5$    B32B15/08, E04F13/12

## II. FIELDS SEARCHED

### Minimum Documentation Searched [7]

| Classification System | Classification Symbols |
|---|---|
| IPC | B32B15/08, E04F13/12 |

### Documentation Searched other than Minimum Documentation to the Extent that such Documents are Included in the Fields Searched [8]

## III. DOCUMENTS CONSIDERED TO BE RELEVANT [9]

| Category* | Citation of Document, [11] with indication, where appropriate, of the relevant passages [12] | Relevant to Claim No. [13] |
|---|---|---|
| Y | JP, A, 60-33937 (Nippon Steel Corp.), 21 February 1985 (21. 02. 85), (Family: none) | 1 - 10 |
| Y | JP, A, 61-10654 (Nitto Electric Industrial Co., Ltd.), 18 January 1986 (18. 01. 86), (Family: none) | 1 - 10 |
| Y | JP, A, 62-99550 (Bridgestone Corp.), 9 May 1987 (09. 05. 87), (Family: none) | 1 - 10 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search | Date of Mailing of this International Search Report |
|---|---|
| June 8, 1990 (08. 06. 90) | June 25, 1990 (25. 06. 90) |
| International Searching Authority | Signature of Authorized Officer |
| Japanese Patent Office | |

Form PCT/ISA 210 (second sheet) (January 1985)